**Europäisches Patentamt**

**European Patent Office**

**Office européen des brevets**

(19)

(11) Veröffentlichungsnummer: **0 039 956**
A2

(12)

# EUROPÄISCHE PATENTANMELDUNG

(21) Anmeldenummer: 81103689.6

(22) Anmeldetag: 13.05.81

(51) Int. Cl.³: **G 01 N 27/18**

(30) Priorität: 13.05.80 JP 62301/80

(43) Veröffentlichungstag der Anmeldung:
18.11.81 Patentblatt 81/46

(84) Benannte Vertragsstaaten:
DE FR GB IT

(71) Anmelder: FUJI ELECTRIC CO. LTD.
1-1, Tanabeshinden, Kawasaki-ku
Kawasaki 210(JP)

(72) Erfinder: Takeo, Tanaka, Dipl.-Ing.
1-4-23 Naka Kunitachi-shi
Tokyo(JP)

(72) Erfinder: Yuji, Sugiyama
1-9-6 Tamadaira Hino-shi
Tokyo(JP)

(74) Vertreter: Mehl, Ernst, Dipl.-Ing. et al,
Postfach 22 01 76
D-8000 München 22(DE)

(54) Messeinrichtung zur Gasanalyse nach dem Wärmeleitfähigkeitsverfahren.

(57) Die Meßeinrichtung zur Gasanalyse nach dem Wärmeleitfähigkeitsverfahren weist eine mit einem Gaseinlaß und einem Gasauslaß versehene, von einem Meßgas durchströmte Meßkammer auf, in der ein mit Konstantstrom beheizter elektrischer Leiter in Form eines Platindrahts aufgespannt ist, dessen Temperatur und damit sein Widerstand von der Wärmeleitfähigkeit des ihn umgebenden Meßgases abhängt.

Die Meßgasströmung durch die Meßkammer wird zyklisch unterbrochen, die Messung des Widerstandes des Heizleiters erfolgt erst dann, wenn das nach Unterbrechung der Gaszufuhr in der Meßkammer verbliebene Gasvolumen strömungsfrei ist und die strömungsbedingte Temperaturänderung des Heizleiters abgeklungen ist. Die so gewonnene Folge von Meßsignalen wird in einer im Takt der Meßgasströmung gesteuerten Halteschaltung verarbeitet, deren stetiges Ausgangssignal sich mit der Höhe der Meßsignale ändert.

Die Einrichtung wird bei kontinuierlichen gasanalytischen Messungen eingesetzt, bei denen ein Wechsel in der Zusammensetzung des Meßgases schnell erkannt werden muß, die also eine hohe Ansprechgeschwindigkeit verlangen.

FIG 1

Fuji Electric Co., Ltd.          Unser Zeichen

Kawasaki (Japan)    ··        .    VPA 80 P 8591 E

Meßeinrichtung zur Gasanalyse nach dem Wärmeleitfähigkeitsverfahren

Die Erfindung bezieht sich auf eine Meßeinrichtung zur Gasanalyse nach dem Wärmeleitfähigkeitsverfahren mit einer
einen Gaseinlaß und einen Gasauslaß aufweisenden Meßkammer, in der ein vom Meßgas umgebener, mit Konstantstrom beheizter elektrischer Leiter aufgespannt ist, dessen temperaturabhängiger Widerstand ein Maß für die spezifische Wärmeleitfähigkeit des Meßgases ist.

Bei derartigen Einrichtungen wird der elektrische Leiter,
beispielsweise ein Edelmetalldraht, von einem konstanten
Strom durchflossen und dadurch erwärmt. Sein elektrischer
Widerstand erhöht sich entsprechend mit der Temperaturzunahme. Die Temperatur, die der elektrische Leiter erreicht, hängt jedoch auch von der Wärmeleitfähigkeit des
ihn umgebenden Gases ab, demzufolge ist der Widerstand
des Heizleiters der Wärmeleitfähigkeit des Gases proportional, so daß daraus auf die Art oder die Zusammensetzung
des Gases geschlossen werden kann.
Üblicherweise sind solche Einrichtungen mit zwei Kammern
ausgestattet, der von dem Meßgas durchströmten Meßkammer
und einer ähnlichen, geschlossenen, ein Referenzgas enthaltenden Vergleichskammer mit einem entsprechenden elektrischen zweiten Heizleiter. Die Widerstandsdifferenzen
zwischen den beiden Heizleitern werden in üblicher Weise
in einer Brückenschaltung ausgewertet und zur Anzeige gebracht.
Da eine Meßwertverfälschung auftritt, wenn die Strömungsgeschwindigkeit des die Meßkammer durchströmenden und den
ersten Heizleiter umspülenden Gases zu groß ist, muß dafür
gesorgt werden, daß das Meßgas relativ langsam durch die
Meßkammer strömt.

Sp 4 Scl / 12.05.1981

**0039956**

Das bedeutet jedoch, daß Änderungen in der Gaszusammensetzung des Meßgases nur mit erheblicher Verzögerung ermittelt werden können, bei bekannten Geräten liegt die Ansprechgeschwindigkeit zwischen 30 und 60 sec für eine 90 %-Anzeige.

Der Erfindung liegt deshalb die Aufgabe zugrunde, mit einfachen Mitteln die Meßeinrichtung so zu verbessern, daß erheblich höhere Ansprechgeschwindigkeiten ohne Einbuße an Meßgenauigkeit erzielbar sind.

Eine prinzipelle Lösung der Aufgabe ist mit der Lehre des Anspruchs 1 gegeben.

Der Anspruch 2 enthält die Merkmale eines Ausführungsbeispiels.

Wesentlich ist, daß bei einer in bekannter Weise aufgebauten Meßeinrichtung die Meßgaszufuhr in die Meßkammer zyklisch unterbrochen wird und daß der Meßwert erst dann ausgegeben wird, wenn das Gas in der Meßkammer zu Ruhe gekommen ist und der Widerstand des Heizleiters sich auf einen konstanten Wert eingestellt hat. Es kann mit hohen Strömungsgeschwindigkeiten des Meßgases gearbeitet werden, so daß ein schneller Gaswechsel zwischen zwei Meßphasen stattfinden kann.

Auf diese Art wird eine schnelle Folge von Meßwerten erzeugt, so daß von einer quasi-kontinuierlichen Messung gesprochen werden kann.

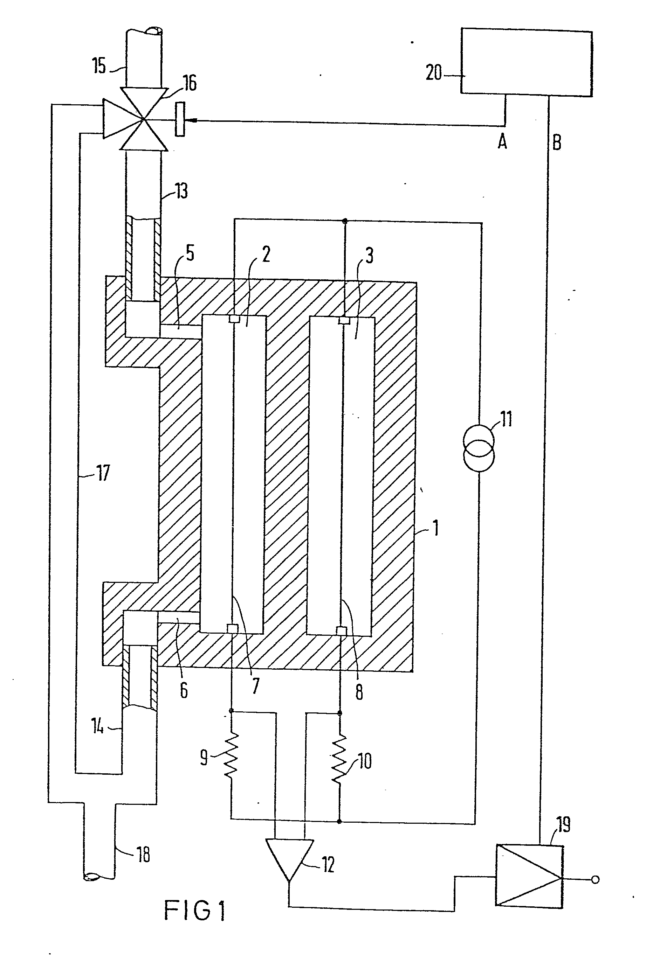

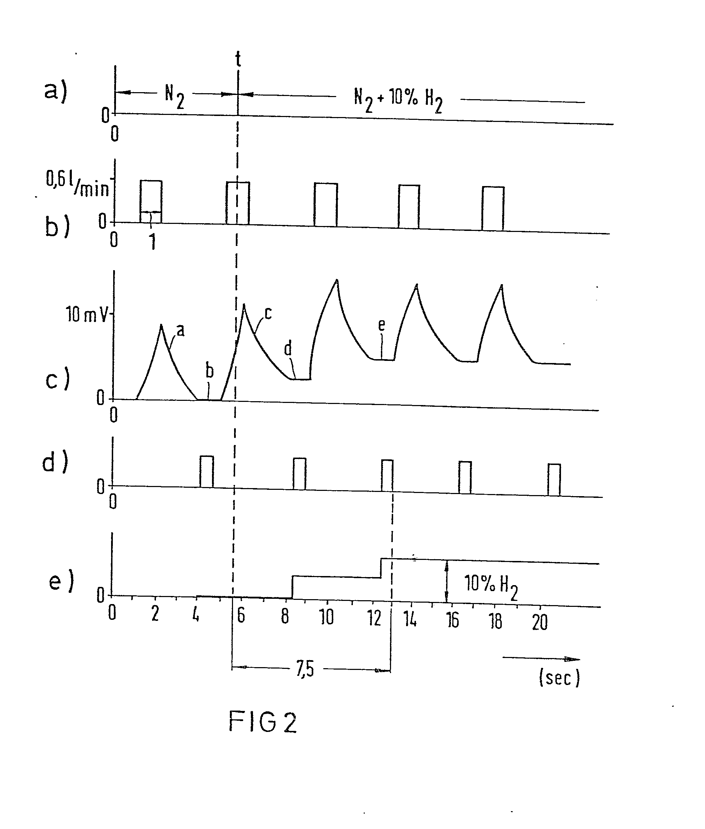

Zur Erläuterung der Erfindung ist in der Figur 1 ein Ausführungsbeispiel schematisch dargestellt, Figur 2 zeigt in Diagrammen den Verlauf der Messung.

Figur 1: In einem Gehäuse 1 sind zwei gleiche oder zumindest ähnliche Kammern angeordnet, eine Meßkammer 2, die von dem über den Einlaß 5 zugeführten und über den Auslaß 6 abgeführten Meßgas durchströmt wird und eine abgeschlossene Vergleichskammer 3, die ein Referenzgas enthält. In beiden Kammern sind elektrische Heizleiter 7 und 8 in Form von Platindrähten axial aufgespannt, sie sind mit den Festwiderständen 9 und 10 zu einer Widerstandsmeßbrücke zusammengeschaltet, die aus der Konstantstromquelle 11 gespeist wird. Die Wärmeabgabe jedes der Heizleiter hängt von der Wärmeleitfähigkeit des sie umgebenden Gases ab, welches die Wärme von dem Heizleiter auf die Wand der jeweiligen Kammer überträgt. Sind beide Kammern mit dem gleichen Gas gefüllt, so sind auch die Temperaturen der Heizleiter und damit ihre Widerstände gleich. Wird jedoch durch die Meßkammer 2 ein Meßgas unterschiedlicher Zusammensetzung geführt, so entsteht eine Widerstandsdifferenz zwischen den Heizleitern 7 und 8, die eine im Verstärker 12 verstärkte Brückenausgangsspannung erzeugt, welche ein Maß für den Anteil eines bestimmten Gases in dem Meßgas ist oder zur Bestimmung des Meßgases selbst dient.

Der Gaseinlaß 5 der Meßkammer 2 ist mit einem Rohrstutzen 13 versehen und über ein Umschaltventil 16 an die Meßgaszuleitung 15 angeschlossen. Mit Hilfe des Umschaltventils 16 kann der Meßgasstrom entweder in die Meßkammer 2 oder in eine Umgehungsleitung 17 geführt werden. Diese und ein mit dem Gasauslaß 6 der Meßkammer 2 verbundener Rohrstutzen 14 münden gemeinsam in die Meßgasableitung 18.

In einem Impulsgeber 20 werden Steuerimpulse mit einstellbarem Tastverhältnis erzeugt und über eine erste Steuerleitung A dem Stellantrieb des Umschaltventils 16 zugeführt, welches den Meßgasstrom in zyklischem Wechsel auf die Meßkammer 2 oder auf die Umgehungsleitung 17 schaltet. Eine zweite Steuerleitung B führt von dem Impulsgeber 20 zu einer Halteschaltung 19 und veranlaßt dort, daß der den Meßwert bei strömungsfreier Messung in der Meßkammer 2 repräsentierende Teil des pulsierenden Brückenausgangssignals jeweils bis zum nächsten Zyklus gehalten wird und an ihrem Ausgang zur Verfügung steht.

In Figur 2 sind Diagramme der zeitlichen Verläufe verschiedener Parameter der Meßeinrichtung aufgetragen.
Diagramm a) zeigt die zeitliche Veränderung der Meßgaszusammensetzung. Das der Meßeinrichtung zugeführte Meßgas besteht beispielsweise aus reinem Stickstoff $N_2$. Zum Zeitpunkt t wird dem Stickstoffstrom 10 % Wasserstoff zugeführt, das Meßgas ist nunmehr ein Gasgemisch, dessen Wasserstoff- oder Stickstoffanteil zu bestimmen ist.

Diagramm b) zeigt den gepulsten Meßgasdurchfluß durch die Meßkammer 2.
Nach Umsteuern des Umschaltventils 16 (Figur 1) in seine erste Schaltstellung strömt das Meßgas mit einer Strömungsgeschwindigkeit von beispielsweise 0,6 1/min durch die Meßkammer. Bei einem in dem Beispiel gewählten Meßkammervolumen von 10 cm$^3$ genügt 1 sec, um die vorhergehende Gasfüllung der Meßkammer vollständig zu ersetzen. Nach Ablauf einer Sekunde wird das Umschaltventil in seine zweite Schaltstellung gesteuert und der Meßgasstrom wieder auf die Umgehungsleitung geschaltet, der Vorgang wiederholt sich mit einem Tastverhältnis der den Strömungsimpulsen gleichzusetzenden Steuerimpulsen über A von etwa 1 : 3.

In dem Diagramm c) ist der Verlauf der Brückenausgangsspannung aufgezeichnet. Besteht die Füllung der Vergleichskammer 3 (Figur 1) ebenfalls aus Stickstoff, so müßte wegen der Gleichheit von Meßgas und Referenzgas beim ersten Einschaltimpuls vor dem Zeitpunkt t die Brückenausgangsspannung Null betragen. In Wirklichkeit wird jedoch infolge des Abkühlungseffektes des einströmenden Gases ein Signal auftreten, dessen Verlauf dem aufsteigenden Ast der Kurve a entspricht. Nach Abschalten der Gaszufuhr klingt die durch die Umströmung des Heizleiters verursachte Widerstandsänderung ab (absteigender Ast der Signalspannungskurve a), es stellt sich ein stationärer Wert b ein, der in diesem Fall, wie erforderlich, Null ist. Da zum Zeitpunkt t der Wechsel in der Gaszusammensetzung des Meßgases erfolgt und dieser in den zweiten Strömungsimpuls fällt, entsteht ein Mischsignal c, das nach Abschalten der Strömung auf einen Wert d zurückgeht, welcher jedoch nicht mehr Null ist, sondern infolge der Zumischung von Wasserstoff während der Hälfte des eine Sekunde dauernden Einschaltimpulses die Wärmeleitfähigkeit des Gasgemisches in der Meßkammer sich im Vergleich zu dem Referenzgas in der Vergleichskammer verändert hat. Während des dritten Strömungsimpulses wird nunmehr die Meßkammer nur von dem Meßgas $N_2$ + 10 % $H_2$ beströmt. Nach Abschalten geht die Brückenausgangsspannung auf den Wert e zurück, welcher der Wärmeleitfähigkeit des Meßgasgemisches entspricht und aus welchem der prozentuale Anteil einer Komponente zu erkennen ist. Die weiteren Strömungsimpulse ergeben Brückenausgangssignale gleicher Form.

Aus einem aufgezeichneten Meßdiagramm c) ist ohne weiteres zu erkennen, wann der durch die Beströmung erzeugte Meßfehler abgeklungen und die Brückenausgangsspannung sich auf einen konstanten Wert eingeschwungen hat. Dementsprechend werden die Steuerimpulse bemessen, die aus dem Impulsgeber über die Steuerleitung B der Halteschaltung 19 zugeführt werden. Sie sind im Diagramm d) dargestellt. Man erkennt, daß die Meßwertübernahme in die Halteschaltung immer dann erfolgt, wenn sich infolge Fehlens einer Strömung in der Meßkammer der Meßwert fest eingestellt hat. Dieser Wert wird dann gehalten, bis beim nächsten Steuerimpuls ein neuer bzw. der gleiche Wert wieder auftritt. Impulsdauer/-Pausen-Verhältnis der in d) dargestellten Steuerimpulse hängt u. a. von der Ausbildung des Heizleiters ab. Da sehr dünne Heizleiter mit Durchmessern zwischen 30 und 50 /um verwendet werden, stellt sich eine konstante Heizleitertemperatur etwa 2 sec nach Abschalten der Meßgaszufuhr in der Meßkammer des Beispiels ein, das dann konstante Meßsignal am Brückenausgang kann dann abgefragt und in der Halteschaltung verarbeitet werden.

Den Verlauf des Ausgangssignals der Halteschaltung 19, das gleichzeitig das Ausgangssignal der Meßeinrichtung ist, zeigt Diagramm e). Man erkennt den stufenförmigen Verlauf, der eine Folge der Änderung in der Zusammensetzung des Meßgases ist; in dem erwähnten praktischen Beispiel konnte bereits nach 7,5 sec der einem Anteil von 10 % $H_2$ im Meßgas entsprechende genaue Wert erreicht werden. Da die durch die Gasströmung verursachten Störeffekte wegfallen, wird dieser Wert in relativ kurzer Zeit erreicht. Die Meßeinrichtung weist also eine sehr geringe Ansprechverzögerung auf.

5 Patentansprüche
2 Figuren

Patentansprüche

1. Meßeinrichtung zur Gasanalyse nach dem Wärmeleitfähigkeitsverfahren mit einer einen Gaseinlaß und einen Gasauslaß aufweisenden Meßkammer, in der ein vom Meßgas umgebener, mit Konstantstrom beheizter elektrischer Leiter aufgespannt ist, dessen temperaturabhängiger Widerstand ein Maß für die spezifische Wärmeleitfähigkeit des Meßgases ist, g e k e n n z e i c h n e t   d u r c h

a) Mittel zum zyklischen Unterbrechen eines durch die Meßkammer führenden Meßgas-Strömungswegs,

b) Mittel zur Verzögerung der Meßwertausgabe der Widerstandsmessung, bis das in der Meßkammer befindliche Gasvolumen strömungsfrei ist.

2. Meßeinrichtung nach Anspruch 1,   g e k e n n z e i c h n e t   d u r c h

a) ein vor dem Gaseinlaß (5) der Meßkammer (2) angeordnetes Umschaltventil (16), das die Meßgaszuleitung (15) in zyklischer Folge in einer ersten Schaltstellung mit der Meßkammer (2),
in einer zweiten Schaltstellung mit einer parallel zur Meßkammer angeordneten Umgehungsleitung (17) verbindet,

b) eine Halteschaltung (19) für das dem Widerstandswert des elektrischen Heizleiters (7) in der Meßkammer (2) entsprechende Signal,

c) einen Steuerimpulse mit einstellbarem Tastverhältnis erzeugender Impulsgeber (20), dessen einer Ausgang über eine erste Steuerleitung (A) mit dem Stellantrieb des Umschaltventils (16) und dessen zweiter Ausgang über eine zweite Steuerleitung (B) mit der Halteschaltung (19) verbunden ist.

3. Meßeinrichtung nach Anspruch 2,   d a d u r c h   g e k e n n z e i c h n e t ,   daß der Heizleiter (7) in der Meßkammer (2) Teil einer Widerstandsbrückenschaltung (7, 8, 9, 10) ist, deren Ausgangssignal der Halteschaltung (19) zugeführt ist.

4. Meßeinrichtung nach Anspruch 2, d a d u r c h   g e -
k e n n z e i c h n e t ,   daß das Schaltzeitverhältnis
des Umschaltventils in der ersten Schaltstellung und in
der zweiten Schaltstellung etwa 1 : 3 beträgt.

5. Meßeinrichtung nach Anspruch 2 und 4, d a d u r c h
g e k e n n z e i c h n e t ,   daß in der ersten Schaltstellung des Umschaltventils (16) das Meßgas während einer Sekunde mit einem Mengenstrom von 0,6 l/min durch die
Meßkammer mit einem Volumen von 10 cm$^3$ geführt wird.

0039956

1/2     80 P 8591

FIG 1

0039956

FIG 2